(19) Europäisches Patentamt
European Patent Office
Office européen des brevets

(11) Veröffentlichungsnummer: **0 548 667 A1**

(12) **EUROPÄISCHE PATENTANMELDUNG**

(21) Anmeldenummer: **92120941.7**

(51) Int. Cl.$^5$: **C08J 9/00**, //C08L5/08

(22) Anmeldetag: **09.12.92**

(30) Priorität: **20.12.91 DE 4142186**

(43) Veröffentlichungstag der Anmeldung:
**30.06.93 Patentblatt 93/26**

(84) Benannte Vertragsstaaten:
**DE FR GB IT NL**

(71) Anmelder: **BAYER AG**

**W-5090 Leverkusen 1 Bayerwerk(DE)**

(72) Erfinder: **Grigat, Ernst, Dr.**
**Am Domblick 13**
**W-5090 Leverkusen 3(DE)**
Erfinder: **Ebert, Wolfgang, Dr.**
**Doerperhofstrasse 31**
**W-4150 Krefeld(DE)**
Erfinder: **Köhler, Burkhard, Dr.**
**Mündelheimer Strasse 94**
**W-4150 Krefeld 11(DE)**
Erfinder: **Beer, Wolfgang, Dr.**
**Heyenfeldweg 132**
**W-4150 Krefeld(DE)**
Erfinder: **Dujardin, Ralf, Dr.**
**Hochheideweg 35**
**W-4156 Willich-Anrath(DE)**
Erfinder: **Horn, Klaus, Dr.**
**Bodelschwinghstrasse 12**
**W-4150 Krefeld(DE)**

(54) **Verfahren zum Verschäumen von thermoplastischen Polycarbonaten.**

(57) Gegenstand der vorliegenden Erfindung sind die Verwendung von amidgruppenhaltigen Polysacchariden zum Verschäumen von thermoplastischen, aromatischen Polycarbonaten gegebenenfalls unter Mitverwendung von üblichen Additiven und/oder von anderen Thermoplasten und/oder von Schlagzähmodifikatoren sowie die erfindungsgemäß erhältlichen Polycarbonatschaumstoff-Formkörper.

EP 0 548 667 A1

Gegenstand der vorliegenden Erfindung ist ein Verfahren zum Verschäumen von thermoplastischen, aromatischen Polycarbonaten, das dadurch gekennzeichnet ist, daß man thermoplastische aromatische Polycarbonate mit 0,01 Gew.-% bis 10 Gew.-%, vorzugsweise 0,05 Gew.-% bis 4 Gew.-% und insbesondere 0,1 Gew.-% bis 2 Gew.-%, bezogen auf Gesamtgewicht Polycarbonat + Polysaccharid, an amidgruppenhaltigen Polysacchariden vermischt und entweder bei Temperaturen von 180 °C bis 320 °C im Extruder ohne Anlegung von Vakuum zu geschäumten Formkörpern extrudiert oder bei Temperaturen von 190 °C bis 330 °C in Spritzgußmaschinen zu geschäumten Formkörpern spritzgießt.

Schaumstoffe aus hochmolekularen Polycarbonaten sind bekannt (Siehe beispielsweise DE-AS 1 031 507). Als Treibmittel sind beispielsweise solche geeignet, die $CO_2$ abspalten oder inerte Gase wie $N_2$ oder $CO_2$.

Polycarbonate werden in Gegenwart von Amiden stark abgebaut (siehe beispielsweise H. Schnell, Chemistry and Physics of Polycarbonates, Interscience Publishers, New York 1964, S. 183).

Die Verwendung von Naturstoffen zum Verschäumen von Polycarbonaten wird in der Fachliteratur nicht gelehrt.

Völlig überraschend wurde gefunden, daS sich Polycarbonat durch Zusatz amidhaltiger Polysaccharide verschäumen läßt, ohne daß die Molmasse des thermoplastischen Polycarbonats signifikant vermindert wird.

Die nach dem erfindungsgemäßen Verfahren erhältlichen Polycarbonatschäume zeigen keine Verfärbung, haben gute Zähigkeit, eine niedrige Dichte und eine gute Zellstruktur.

Gegenstand der vorliegenden Erfindung ist somit auch die Verwendung von amidgruppenhaltigen Polysacchariden zum Verschäumen von thermoplastischen, aromatischen Polycarbonaten.

Gegenstand der vorliegenden Erfindung sind außerdem die nach dem erfindungsgemäßen Verfahren erhältlichen Polycarbonatschaumstofformkörper.

Amidgruppenhaltige Polysaccharide im Sinne der vorliegenden Erfindung sind beispielsweise aus natürlichen Rohstoffen oder auf synthetischem Weg gewonnene amid- oder amingruppenhaltige Poly- oder Oligosaccharide.

Bevorzugt handelt es sich erfindungsgemäß um derivatisiertes Chitin wie beispielsweise Chitosan und besonders bevorzugt um Chitin.

Chitin im erfindungsgemäßen Sinn ist ein (1-->4)-$\beta$-Polymer der 2-Acetamido-2-deoxy-D-glucose mit der Struktur:

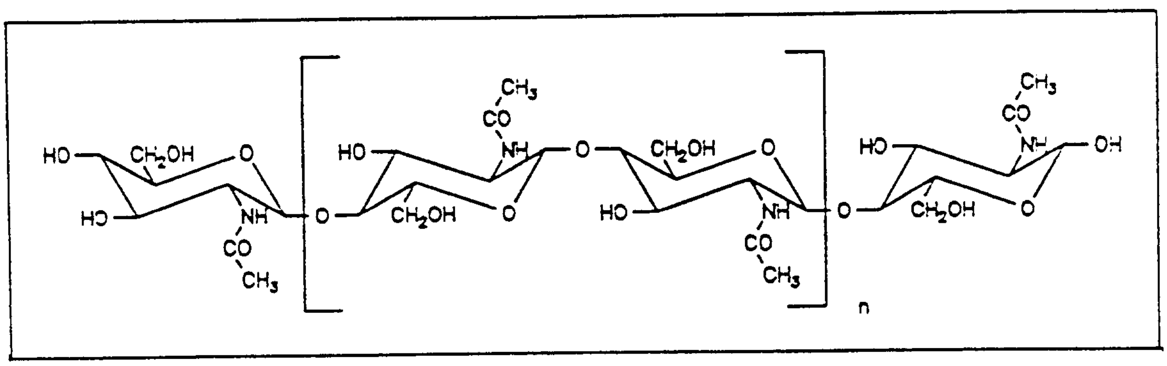

Chitin

Erfindungsgemäß wird Chitin mit einer Restfeuchtigkeit von 2-15 Gew.-%, bevorzugt 5-11 Gew.-%, Wasser eingesetzt. Der Wassergehalt des Chitins und des Polycarbonates zusammengenommen reicht nicht zu einer Verschäumung aus, so daß es sich nicht um Wasser als bevorzugtes Treibmittel handelt. Der Stickstoffgehalt von erfindungsgemäßem Chitin liegt zwischen 6.0 und 7.0 Gew.-%, der Grad der Acetylierung zwischen 85 und 100%. Der Aschegehalt (900 °C) beträgt 0.1 - 1.3 Gew.-%. Erfindungsgemäßes Chitin hat ein Molekulargewicht von 10.000 - 1.000.000, bevorzugt 100.000 - 600.000.

Chitin kommt in der Natur vorwiegend als Bestandteil der Zellwände bzw. des Außenskeletts vor in Fungi, Algae, Protozoa, Cnidaria, Aschelmintes, Endoprocta, Bryozoa, Phoronida, Brachiopoda, Echiurida, Annelida, Mollusca, Pogonophora und vor allem Anthropoda (Crustacea, Insecta, Arachnida und Chilopoda). Zum Vorkommen und der Biosynthese von Chitin siehe R.A. Muzarelli, Chitin, Pergamon Press, Oxford, 1977, S. 5 ff. Zum erfindungsgemäßen Verschäumen eignen sich alle Chitinmodifikationen sowie deren

Gemische, besonders das aus Crustaceae gewonnene Material.

Erfindungsgemäß zum Verschämen von Polycarbonat geeignet sind sowohl Chitinflocken mit Kantenlängen bis 2 cm und einer Dicke bis 1 mm als auch bevorzugt feingemahlenes Material. Die Dosierung erfolgt durch Zugabe des Verschäumungsmittels in Lösung oder vorzugsweise fester Form oder als Konzentratgranulat in Polycarbonat oder anderen mit Polycarbonat mischbaren Kunststoffen in den üblichen Dosierungsvorrichtungen.

Erfindungsgemäß kann auch verunreinigtes Chitin aus beispielsweise Industrieabfallen der Fisch- oder Krabben- oder ähnlicher Industrie zum Verschäumen eingesetzt werden. Der Chitingehalt dieser Abfälle kann 40-100 Gew.-% der Trockenmasse, bevorzugt 70-100 Gew.-% der Trockenmasse, betragen, der Rest kann aus nativen Restbestandteilen der jeweiligen als Chitinquelle verwendeten Tiere oder Pflanzen bestehen.

Ausführliche Informationen über Chitin und Chitinprodukte findet man in R.A. Muzzarelli, Chitin, Pergamon Press, Oxfor, 1977; G. O. Aspinall, The Polysaccharides, Vol. 3, Academic Press, Orlando, 1985; W. A. Wood, S. T. Kellog, Methods in Enzymology, Vol. 161: Biomass, Part B (Lignin, Pectin, and Chitin), Academic Press, San Diego, 1988; G. Skjak-Braek, T. Anthonson, P. Sandford (Ed.), Chitin and Chitosan, Elsevier, London/New York, 1989.

Erfindungsgemäßes Chitosan ist teilweise bis vollständig deacetyliertes Chitin mit einem Acetylierungsgrad von 0-85 %, bevorzugt 30-60 %. Zur weiteren Charakterisierung sei auf die o.a. Literatur verwiesen.

Erfindungsgemäße Chitinderivate beinhalten beispielsweiso N-Acylchitosane, N-Carboxyalkyl(aryl)-chitosane, O-Carboxylalkylchitosane und -chitine, Derivate durch Einbau oder Austausch von Zuckereinheiten, Metallionchelate, Pfropfcopolymere auf Chitin oder Chitosan, und andere chemische Modifikationen am Chitin oder Chitosan.

Die Dosierung des erfindungsgemäßen verunreinigten Chitins, des Chitosans oder der erfindungsgemäßen Chitinderivate kann wie für Chitin beschrieben erfolgen.

Thermoplastische aromatische Polycarbonate im Sinne der vorliegenden Erfindung sind Polycarbonate, die nach den üblichen, in der Literatur bekannten Methoden aus Diphenolen und Carbonatspendern hergestellt worden sind (siehe beispielsweise H. Schnell, Chemistry and Physics of Polycarbonates, Interscience Publishers, New York, 1964", US-Patent 3 028 365 und deutsche Offenlegungsschrift 3 832 396 (Le A 26 344)).

Diphenole für solche Polycarbonate können beispielsweise Hydrochinon, Resorcin, Dihydroxydiphenyle, Bis-(hydroxyphenyl)-alkane, Bis-(hydroxyphenyl)-cycloalkane, Bis(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole, sowie deren kernalkylierte und kernhalogenierte Verbindungen sein.

Bevorzugte Diphenole sind beispielsweise 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind beispielsweise 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)propan, 1,1-Bis-(4-hydroxyphenyl)-cyclohexan und 1,1-Bis-(4-hydroxyphenyl)-3,3,5-trimethylcyclohexan, (2-Hydroxyphenyl)-(4-hydroxyphenyl)-methan, Bis-(4-hydroxyphenyl)-methan, Bis-$C_4$-hydroxyphenyl)-sulfid und Bis-(4-hydroxy-phenyl)-sulfon.

Die Diphenole können sowohl allein als auch im Gemisch miteinander verwendet werden, es sind also sowohl Homopolycarbonate als auch Copolycarbonate einbezogen. Die Diphenole sind literaturbekannt oder nach literaturbekannten Verfahren herstellbar.

Es können auch geringe Mengen, vorzugsweise Mengen zwischen 0,05 und 2,0 Mol-%, bezogen auf die Mole eingesetzter Diphenole, an tri- oder mehr als trifunktionellen Verbindungen, insbesondere solchen mit drei oder mehr als drei phenolischen Hydroxylgruppen, mitverwendet werden. Einige der verwendbaren Verbindungen mit drei oder mehr als drei phenolischen Hydroxylgruppen sind beispielsweise
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,

Tri-(4-hydroxyphenyl)-phenylmethan,
2,2-Bis-[4,4-bis-(4-hydroxyphenyl)-cyclohexyl]-propan,
2,4-Bis-(4-hydroxyphenyl-isopropyl)-phenol,
2,6-Bis(2-hydroxy-5'-methyl-benzyl)-4-methylphenol,
2-(4-Hydroxyphenyl)-2-(3,4-dihydroxyphenyl)-propan,
Hexa-(4-(4-hydroxyphenyl-isopropyl)-phenyl)-orthoterephthalsäureester,
Tetra-(4-hydroxyphenyl)-methan,
Tetra-(4-(4-hydroxyphenyl-isopropyl)-phenoxy)-methan und
1,4-Bis(4',4''-dihydroxytriphenyl)-methyl-benzol.

Weitere mögliche Verzweiger sind 2,4-Dihydroxybenzoesäure, Trimesinsäure, Cyanurchlorid und 3,3-Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern können entweder mit den Diphenolen selbst und den Molekulargewichtsreglern in der wäßrigen alkalischen Phase vorgelegt werden, oder in einem organischen Lösungsmittel, gelöst vor der Phosgenierung, zugegeben werden.

Geeignete Molekulargewichtsregler sind die bekannten, vorzugsweise Monophenole.

Die aromatischen Polycarbonate gemäß vorliegender Erfindung sollen Gewichtsmittelmolekulargewichte $\overline{M}w$ (ermittelt mittels Gelpermeations-Chromatographie) zwischen 5.000 und 50.000, vorzugsweise zwischen 15.000 und 35.000 haben.

Die Lösungsviskositäten liegen entsprechend zwischen 1,15 und 1,35, gemessen in Dichlormethan (0,5 g/100 ml).

Thermoplastische, aromatische Polycarbonate im Sinne der vorliegenden Erfindung schließen thermoplastische aromatische Polyestercarbonate mit ein, also solche "Polycarbonate", in denen ein Teil, maximal 50 Mol-% an Carbonatstruktureinheiten durch aromatische Dicarboxylatstruktureinheiten in bekannter Weise ersetzt sind.

Geeignete aromatische Dicarbonsäuren sind beispielsweise Orthophthalsäure, Terephthalsäure, Isophthalsäure, tert.-Butylisophthalsäure, 3,3'-Diphenyldicarbonsäure, 4,4'-Diphenyldicarbonsäure, 4,4'-Diphenyletherdicarbonsäure, 4,4'-Benzophenondicarbonsäure, 3,4'-Benzophenondicarbonsäure, 4,4' - Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Geeignete Diphenole sind die vorstehend für die Polycarbonatherstellung genannten.

Entsprechendes gilt für die Verzweiger und für die monophenolischen Kettenabbrecher, wobei hier aber auch aromatische Monocarbonsäuren beispielsweise in Form ihrer Säurechloride oder Ester verwendet werden können.

Die Kohlensäure kann entweder via $COCl_2$ oder via Diphenylcarbonat in die Polyestercarbonate eingebaut werden, je nach Wahl des Herstellungsverfahrens, also je nachdem, ob Phasengrenzflächenpolykondensation oder Schmelzumesterung zur Polyestercarbonatherstellung verwendet wird.

Entsprechendes gilt für die aromatischen Dicarbonsäuren; sie werden entweder als aromatische Dicarbonsäuredichloride im Zweiphasengrenzflächenverfahren oder als Dicarbonsäurediester im Schmelzumesterungsverfahren eingesetzt. Entsprechendes gilt, falls als Kettenabbrecher Monocarbonsäuren eingesetzt werden.

Die Herstellung der erfindungsgemäß zu verschäumenden Polyestercarbonate erfolgt nach bekannten Herstellungsverfahren, also wie bereits erwähnt beispielsweise nach dem Phasengrenzflächenverfahren oder nach dem Schmelzumesterungsverfahren.

Die zu verschäumenden Polyestercarbonate können somit sowohl linear als auch in bekannter Weise verzweigt sein.

Die aromatischen Polyestercarbonate gemäß vorliegender Erfindung haben mittlere Gewichtsmittelmolekulargewichte $\overline{M}w$ (ermittelt mittels Gelpermeations-Chromatographie) zwischen 5.000 und 50.000, vorzugsweise zwischen 15.000 und 35.000.

Die Lösungsviskositäten liegen entsprechend zwischen 1,15 und 1,35, gemessen in Dichlormethan (0,5 g/100 ml).

Die molare Menge an Carbonat-Einheiten zu aromatischen Dicarboxylateinheiten in den erfindungsgemäße zu verschäumenden Polyestercarbonaten liegt mindestens bei 50:50, vorzugsweise bei 75:25 und insbesondere bei 90:10.

Die Polycarbonate werden sowohl getrocknet als auch ungetrocknet, vorzugsweise ungetrocknet für das erfindungsgemäße Verschäumungsverfahren eingesetzt, d.h. die Polycarbonate haben vorzugsweise einen

$H_2O$-Gehalt von 0,01 bis 0,1 Gew.-%.

Das erfindungsgemäße Verschäumungsverfahren kann noch unter Zusatz von für die Schaumherstellung üblichen Additiven wie Verstärkungsstoffen, beispielsweise Glasfasern, und/oder Nucleierungsmitteln und/oder Flammschutzmitteln und/oder Entformungsmitteln und/oder Farbstoffen und/oder Pigmenten, beispielsweise Rutil oder Ruß, und/oder Stabilisatoren gegen Hitze, UV-Strahlung und Feuchtigkeit durchgeführt werden.

Geeignete Flammschutzmittel, die in Mengen bis zu 10 Gew.-%, bezogen auf Polycarbonatanteil eingesetzt werden, sind beispielsweise Tetrachlorphthalsäureanhydrid, Tetrabromphthalsäureanhydrid, Tetrachlorbisphenol-A (Monomer oder Oligomer), Tetrabrombisphenol-A (Monomer oder Oligomer), Perfluorbutansulfonsäure Na- oder K-Salz alleine oder im Gemisch mit Poly(tetrafluorethylen)-pulver.

Gegenstand der vorliegenden Erfindung ist somit auch das Verschäumen von thermoplastischen aromatischen Polycarbonaten mit einem Gehalt an üblichen Additiven, das dadurch gekennzeichnet ist, daß man thermoplastische, aromatische Polycarbonate nach Zusatz der üblichen Additive mit 0,01 Gew.-% bis 10 Gew.-%, vorzugsweise mit 0,05 Gew.-% bis 4 Gew.-%, und insbesondere 0,1 Gew.-% bis 2 Gew.-%, bezogen auf Gesamtgewicht Polycarbonat + Polysaccharid, an amidhaltigen Polysacchariden vermischt und entweder bei Temperaturen von 180 °C bis 320 °C im Extruder ohne Anlegung von Vakuum zu geschäumten Formkörpern extrudiert oder bei Temperaturen von 190 °C bis 330 °C in Spritzgußmaschinen zu verschäumten Formkörpern spritzgießt.

Gegenstand der vorliegenden Erfindung sind außerdem die nach diesem erfindungsgemäßen Verfahren erhältlichen, Additiv-haltigen Polycarbonatschaumstofformkörper.

Eine Erweiterung des erfindungsgemäßen Verfahrens ist noch dadurch möglich, daß den zu verschäumenden Polycarbonaten noch andere Thermoplasten zugemischt sein können, wobei der Anteil an erfindungsgemäß zu verschäumenden Polycarbonaten 10 bis 100 Gew.-%, vorzugsweise 20 bis 100 Gew.-% und insbesondere 50 bis 100 Gew.-%, bezogen auf das Gewicht der Mischung aus Polycarbonat und anderem Thermoplast, beträgt.

Die anderen Thermoplasten sind vorzugsweise thermoplastische Polyester, unter den Polyestern bevorzugt thermoplastische Polyalkylenterephthalate, sowie ABS-Polymerisate, SAN-Polymerisate, Polysulfone, Polyamide, wobei mikrokristalline (sogenannte amorphe) Polyamide bevorzugt sind, und Polyolefine.

Das Verschäumungsverfahren wird durch die Anwesenheit dieser anderen Thermoplasten nicht blokkiert.

Gegenstand der vorliegenden Erfindung ist somit auch das Verschäumen von thermoplastischen aromatischen Polycarbcnaten im Gemisch mit maximal 90 Gew.-%, vorzugsweise maximal 80 Gew.-% und insbesondere maximal 50 Gew.-%, bezogen auf die Gesamtmischung aus Polycarbonat und anderem Thermoplast, an anderen Thermoplasten, das dadurch gekennzeichnet ist, daß man die thermoplastischen aromatischen Polycarbonate im Gemisch mit den jeweiligen Gewichtsmengen an anderen Thermoplasten erfindungsgemäß verschäumt.

Auch hierbei können die bereits erwähnten üblichen Additive mit einbezogen werden.

Gegenstand der vorliegenden Erfindung sind außerdem die nach diesem erfindungsgemäßen Verfahren erhältlichen Polycarbonatschäume, die noch andere Thermoplasten und gegebenenfalls die üblichen Additive enthalten.

Den erfindungsgemäß zu verschäumenden Polycarbonaten können noch die bekannten Schlagzähmodifikatoren wie beispielsweise hydrierte Butadien-Styrol-Copolymerisate oder Acrylatpfropfkautschuke in den üblichen Mengen, vorzugsweise in Mengen bis zu 10 Gew.-% bezogen auf Gewicht Polycarbonat, zugesetzt sein.

Gegenstand der vorliegenden Erfindung ist somit außerdem das Verschäumen von thermoplastischen, aromatischen Polycarbonaten in all seinen bislang dargelegten Varianten, das dadurch gekennzeichnet ist, daß man den Polycarbonaten vor dem erfindungsgmeäßen Verschäumen Schlagzähmodifikatoren in Mengen bis zu 10 Gew.-%, bezogen auf Gewicht Polycarbonat, zugesetzt hat.

Gegenstand der vorliegenden Erfindung sind außerdem die nach diesem Verfahren erhältlichen Polycarbonatschaumstofformkörper.

Erfindungsgemäß mitzuverwendende thermoplastische Polyalkylenterephthalate sind beispielsweise solche auf Basis von Ethylenglykol, Propandiol-1,3, Butandiol-1,4, Hexandiol-1,6 und 1,4-Bis-hydroxymethylcyclohexan. Die Molekulargewichte (Mw) dieser Polyalkylenglycolterephthalate liegen zwischen 10.000 und 80.000. Die Polyalkylenglykolterephthalate können nach bekannten Verfahren beispielsweise aus Terephthalsäuredialkylester und dem entsprechenden Diol durch Umesterung erhalten werden. Beispielsweise geht man von einem niederen Alkylester der Terephthalsäure, vorzugsweise dem Dimethylester, aus und estert diesen mit einem Überschuß an Diol in Gegenwart geeigneter Katalysatoren zum Bishydroxyalkylester der Terephthalsäure um. Dabei wird die Temperatur ausgehend von 140 °C auf 210-220 °C erhöht. Der in

Freiheit gesetzte Alkohol wird abdestilliert. Die Aufkondensation erfolgt anschließend bei Temperaturen von 210-280 °C, der Druck wird dabei stufenweise bis auf weniger als 1 Torr erniedrigt, wobei das überschüssige Diol abdestilliert wird.

Erfindungsgemäß mitzuverwendende thermoplastische ABS-Polymerisate sind solche, in denen auf einen Kautschuk entweder ein Monomer aus der Reihe Styrol, Methylmethacrylat oder eine Monomermischung von 95-50 Gew.-%. Styrol, α-Methylstyrol, Methylmethacrylat oder Mischungen daraus und 5-50 Gew.-% Acrylnitril, Methylmethacrylat, Maleinsäureanhydrid, N-substituierte Maleinimide oder Mischungen daraus pfropfpolymerisiert sind, Geeignete Kautschuke sind insbesondere Polybutadien, Butadien/Styrol-Copolymerisate mit bis zu 30 Gew.-% einpolymerisiertem Styrol, Copolymerisate von Butadien und Acrylnitril mit bis zu 20 Gew`-% Acrylnitril oder Copolymerisate von Butadien mit bis zu 20 Gew.-% eines niederen Alkylethers von Acryl- oder Methacrylsäure (z.B. Methylacrylat, Ethylacrylat, Methylmethacrylat und Ethylmethacrylat).

Die Pfropfmischpolymerisate enthalten 5-80 Gew.-%, insbesondere 20-70 Gew.-%, Kautschuk und 95-20 Gew.-%, insbesondere 80-30 Gew.-%, pfropfcopolymerisierte Monomere. Die Kautschuke liegen in diesen Pfropfmischpolymerisaten in Form wenigstens partiell vernetzter Teilchen einer mittleren Teilchengröße von 0,09 bis 5 µm, insbesondere von 0,1 bis 1 µm, vor. Derartige Pfropfmischpolymerisate werden durch radikalische Pfropfcopolymerisation von Monomeren aus der Reihe Styrol, α-Methylstyrol, Acrylnitril, Methylmethacrylat, Maleinsäureanhydrid in Gegenwart der zu pfropfenden Kautschuke hergestellt und sind durchweg bekannt. Bevorzugte Herstellungsverfahren für solche Pfropfmischpolymerisate sind die Emulsions-, Lösungs-, Masse- oder Suspensionspolymerisation.

Erfindungsgemäß mitzuverwendende thermoplastische SAN-Polymerisate sind Copolymerisate von 95-50 Gew.-Teilen Styrol, α-Methylstyrol, Methylmethacrylat oder Mischungen daraus und 5-50 Gew.-Teilen Acrylnitril, Methacrylnitril, Methylmethacrylat oder Mischungen daraus. Unter diesen Copolymerisaten sind besonders bevorzugt Produkte aus etwa 80-60 Gew`-% Styrol, und 20-40 Gew.-% Acrylnitril, sowie die analogen Copolymerisate aus α-Methylstyrol.

Erfindungsgemäß mitzuverwendende Polysulfone sind beispielsweise Polykondensate mit unter anderem Sulfoneinheiten in der Hauptkette mit einer Molmasse zwischen 1000 und 200000 (gemessen nach gelchromatographischen Methoden), die nach den üblichen Verfahren hergestellt werden (siehe beispielsweise K. Idel in: Houben-Weyl, Methoden der Organischen Chemie, Bd. E20, Teil 2, S. 1467 ff., Thieme Verl, Stuttgart 1987).

Erfindungsgemäß mitzuverwendende Polyamide sind Polymere mit wiederkehrenden Carbonsäureamidgruppen in der Hauptkette wie beispielsweise Polykondensate von Diaminen mit Dicarbonsäuren bzw. Polykondensate aus Lactamen mit einer Molmasse (gemessen nach gelchromatographischen Methoden) von 1000 bis 100000, die nach den üblichen Verfahren (siehe beispielsweise P. Matthies, R.-V. Meyer in: Houben-Weyl, Methoden der Organischen Chemie, Bd. E20, Teil 2, S. 1497 ff., Thieme Verlag, Stuttgart 1987) hergestellt werden, wobei Materialien mit niedriger Kristallinität bevorzugt werden.

Erfindungsgemäß mitzuverwendende thermoplastische Polyolefine sind Polymere von aliphatischen ungesättigten Kohlenwasserstoffen, wie beispielsweise Ethylen, Propylen, Butylen oder Isobutylen, die nach üblichen Verfahren z.B. Radikalpolymerisation erhalten werden und mittlere Gewichtsmittel oder Molekulargewichte Mw (gemessen nach gelchromatographischen Methoden) zwischen 1000 und 3.000.000 haben, Es ist sowohl Hochdruckpolyolefin als auch Niederdruckpolyolefin brauchbar. Die ungesättigten Kohlenwasserstoffe können auch mit anderen Vinylmonomeren wie z.B. Vinylacetat in bekannter Weise copolymerisiert sein.

Die Vorabmischung der einzelnen Komponenten also Polycarbonate, amidgruppenhaltige Polysaccharide, übliche Additive, andere Thermoplasten und/oder Schlagzähmodifikatoren kann in bekannter Weise bei verschiedenen Temperaturen, vorzugsweise bei Raumtemperatur erfolgen.

Die Mischung der Komponenten kann beispielsweise in Losung, etwa in Methylenchlorid oder vorzugsweise in Substanz erfolgen, wobei die Polysaccharide feingemahlen eingesetzt werden.

Ebenso kann Verschäumungsmittel in hoher Konzentration (beispielsweise 3 Gew.-% bis 7 Gew.-% erfindungsgemäße Polysaccharide) in Polycarbonat oder einem mit Polycarbonat mischbaren thermoplastischen Polymer eingearbeitet und granuliert werden und dieses Gemisch als Konzentrat in den üblichen Dosiervorrichtungen zu erfindungsgemäß zu verschäumenden Polycarbonaten zudosiert werden.

Die erfindungsgemäße Verschäumung erfolgt dann auf den üblichen Maschinen, beispielsweise Einwellenextrudern. Geeignete Verfahren sind das freie Aufschäumen oder das freie Aufschäumen in gekühlten Kalibrierungen oder das Verschäumen nach innen, das sogenannte Celuka-Verfahren.

Die erfindungsgemäß erhältlichen Schaumstoffe können zu beliebigen Formkörpern ausgeformt oder nach der Verschäumung zurechtgeschnitten werden. Geeignete Formkörper sind beispielsweise Rohre, Platten und Profile der verschiedensten Art, welche gegebenenfalls gefärbt, kaschiert oder lackiert werden

können. Sie können auch nach der Verschäumung zurechtgeschnitten werden oder auf andere Weise mechanisch oder thermisch geformt und verarbeitet werden.

Die erfindungsgemäß erhältlichen Schaumstoff-Formkörper können vorteilhaft als Formteile zur Herstellung großflächiger Abdeckungen von Lampen, Gehäusen, Bürogeräten oder zur Herstellung großflächiger Elemente, wie beispielsweise Schrankteile, zur Herstellung von Profilen wie beispielsweise Fensterrahmen oder zur Herstellung von Konstruktionsteilen wie beispielsweise im Automobilbereich oder im Baubereich, eingesetzt werden.

Beispiel 1:

Man extrudiert eine Mischung aus 99 Gew.-% Homopolycarbonat aus 2,2-Bis-(4-hydroxyphenyl)-propan ($\eta_{rel}$ = 1.283; 0.5%ig in Methylenchlorid) und 1 Gew.-% Chitin. Die Extrusion erfolgt auf einem Einschneckenextruder, Die Temperatur betrug 240 °C. Die Verschäumung wurde ohne Kalibrierung nach dem Verfahren der freien Aufschäumung durchgeführt. Man erhielt einen feinporigen, geschlossen-zelligen Schaum der Dichte 0.6 g/cm$^3$. Die relative Viskositat des Schaumes betrug $\eta_{rel}$ = 1.288 (0.5%ig in Methylenchlorid).

Beispiel 2:

Man extrudiert eine Mischung aus 98 Gew.-% Homopolycarbonat aus 2,2-Bis-(4-hydroxyphenyl)-propan ($\eta_{rel}$ = 1.282; 0.5%ig in Methylenchlorid) und 2 Gew.-% Chitin. Die Extrusion erfolgt auf einem Einschneckenextruder. Die Temperatur betrug 230 °C. Die Verschäumung wurde ohne Kalibrierung nach dem Verfahren der freien Aufschäumung durchgeführt. Man erhielt einen feinporigen, geschlossenzelligen Schaum der Dichte 0.75 g/cm$^3$. Die relative Viskosität des Schaumes betrug $\eta_{rel}$ = 1.284 (0.5%ig in Methylenchlorid).

Beispiel 3:

Man extrudiert eine Mischung aus 99.5 Gew.-% Homopolycarbonat aus 2,2-Bis-(4-hydroxyphenl)-propan ($\eta_{rel}$ = 1.282; 0.5%ig in Methylenchlorid) und 0.5 Gew.-% Chitin.

Die Extrusion erfolgt auf einem Einschneckenextruder. Die Temperatur betrug 260 °C. Die Verschäumung wurde ohne Kalibrierung nach dem Verfahren der freien Aufschäumung durchgeführt. Man erhielt einen feinporigen, geschlossenzelligen Schaum der Dichte 0.76 g/cm$^3$. Die relative Viskosität des Schaumes betrug $\eta_{rel}$ = 1.276 (0.5%ig in Methylenchlorid).

Beispiel 4

Man verarbeitet eine Mischung aus 99 Gew.-% schlagzähmodifiziertem glasfaserverstärktem Homopolycarbonat aus 2,2-Bis-(4-hydroxyphenyl)-propan ($\eta_{rel}$ = 1.28; 0,5 %ig in Methylenchlorid) und 1 Gew.-% Chitin bei 310 °C auf einer Doppelwellenspritzgußmaschine. Die erhaltenen Spritzgußschaumkörper wurden auf eine Dichte von 0,9 kg/l eingestellt. Man erhielt das Werkzeug gut ausformende Spritzgußschaumkörper mit einer feinporigen, gleichmäßigen Schaumstruktur, die eine relative Viskosität von $\eta_{rel}$ = 1.25 aufwiesen und der Brandklasse VO entsprachen.

## Patentansprüche

1. Verfahren zum Verschäumen von thermoplastischen, aromatischen Polycarbonaten, dadurch gekennzeichnet, daß man thermoplastische aromatische Polycarbonate mit 0,01 Gew.-% bis 10 Gew.-%, bezogen auf Gesamtgewicht Polycarbonat + Polysaccharid, an amidgruppenhaltigen Polysacchariden vermischt und entweder bei Temperaturen von 180 °C bis 320 °C im Extruder ohne Anlegung von Vakuum zu geschäumten Formkörpern extrudiert oder bei Temperaturen von 190 °C bis 330 °C in Spritzgußmaschinen zu geschäumten Formkörpern spritzgießt.

2. Verwendung von amidgruppenhaltigen Polysacchariden zum Verschäumen von thermoplastischen, aromatischen Polycarbonaten.

3. Polycarbonatschaumstoff-Formkörper erhältlich nach dem Verfahren des Anspruchs 1.

**4.** Verfahren gemäß Anspruch 1, dadurch gekennzeichnet, daß man die thermoplastischen, aromatischen Polycarbonate nach Zusatz der üblichen Additive verschäumt.

**5.** Additiv-haltige Polycarbonatschaumstoff-Formkörper erhältlich nach dem Verfahren des Anspruchs 4.

**6.** Verfahren gemäß Ansprüche 1 und 4, dadurch gekennzeichnet, daß man die thermoplastischen Polycarbonate im Gemisch mit maximal 90 Gew.-%, bezogen auf die Gesamtmischung aus Polycarbonat und anderem Thermoplast, an anderen Thermoplasten verschäumt.

**7.** Polycarbonatschaumstoff-Formkörper, die noch andere Thermoplasten und gegebenenfalls die üblichen Additive enthalten, erhältlich nach dem Verfahren des Anspruchs 6.

**8.** Verfahren gemäß Ansprüche 1, 4 und 6, dadurch gekennzeichnet, daß man den Polycarbonaten vor dem Verschäumen Schlagzähmodifikatoren in Mengen bis zu 10 Gew.-%, bezogen auf Gewicht Polycarbonat, zugesetzt hat,

**9.** Polycarbonatschaumstoff-Formkörper erhältlich nach dem Verfahren des Anspruchs 8.

Europäisches Patentamt

# EUROPÄISCHER RECHERCHENBERICHT

Nummer der Anmeldung

EP 92 12 0941

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DATABASE WPIL<br>Derwent Publications Ltd., London, GB;<br>AN 88108887[16]<br>& JP-A-63 057 669 (PANAC KOGYO KK) 12. März 1988<br>* Zusammenfassung *<br>--- | 1 | C08J9/00<br>//C08L5:08 |
| A | FR-A-2 274 644 (SUMITOMO CHEMICAL COMPANY, LTD. & HAYASHIBARA BIOCHEMICAL LABORATORIES)<br>* Ansprüche 1,2,4,5,8,11-13 *<br>* Seite 4, Zeile 1 - Zeile 16 *<br>* Seite 6, Zeile 32 - Seite 7, Zeile 1 *<br>----- | 1,4 | |

RECHERCHIERTE SACHGEBIETE (Int. Cl.5)

C08J

Der vorliegende Recherchenbericht wurde für alle Patentansprüche erstellt

| Recherchenort | Abschlußdatum der Recherche | Prüfer |
|---|---|---|
| DEN HAAG | 24 MAERZ 1993 | NIAOUNAKIS M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)